# EUROPEAN PATENT APPLICATION

(11) **EP 2 557 491 A2**
(43) Date of publication of application: **13.02.2013**
(21) Application number: 12162967.9
(22) Date of filing: 03.04.2012
(51) Int. Cl.: G06F 3/048

(54) **Hand-held devices and methods of inputting data**

(30) Priority: 08.08.2011 TW 100128141
(71) Applicant: Acer Incorporated, Taipei Hsien 221 (TW)
(72) Inventor: Wang, Wei-Tong, 221 Taipei Hsien (TW)
(74) Representative: Becker Kurig Straus

(57) **Abstract**

A hand-held device comprises a touch unit detecting a drag action of a user and outputting a gesture signal corresponding to the drag action. A display unit having a first display area is configured to display a partial portion of a virtual keyboard and display another partial portion of the virtual keyboard by a scrolling function according to a control signal, and a process unit outputting the control signal according to the gesture signal.

## Description

### CROSS REFERENCE TO RELATED APPLICATIONS

This Application claims priority of Taiwan Patent Application No. 100128141, filed on Aug. 08, 2011, the entirety of which is incorporated by reference herein.

### BACKGROUND OF THE INVENTION

### Field of the Invention

The disclosure is related to data input technology of hand-held devices, and, more particularly to inputting data by using a scrolling virtual keyboard.

### Description of the Related Art

In recent years, with the development of mobile devices, users have changed their habits for storing data. Compared with traditional personal computers, when users browse data with their mobile device, the main influence for users is the different operation interfaces. Therefore, the habits of users of using a mouse to execute scrolling actions and searching key points by using keyboards need to be changed.

Generally speaking, when a user needs to input some words in the mobile device, the system of the mobile device will display a virtual keyboard in the screen for the user. However, when a user operates the virtual keyboard with a current placement, due to the limitation of the screen size, the user may touch undesired buttons on the virtual keyboard.

### BRIEF SUMMARY OF THE INVENTION

Hand-held devices and methods of inputting data in the invention are provided to overcome the above mentioned problems.

An embodiment of the invention provides a hand-held device comprising a touch unit detecting a drag action of an user and outputting a gesture signal corresponding to the drag action, a display unit having a first display area, configured to display a partial portion of a virtual keyboard and display another partial portion of the virtual keyboard by a scrolling function according to a control signal, and a process unit outputting the control signal according to the gesture signal.

An embodiment of the invention provides a method of inputting data which is applied to a hand-held device with a display unit. First, a partial portion of a virtual keyboard is displayed on a first display area of the display unit. Then, a drag action of a user is detected by a touch unit, and a gesture signal corresponding to the drag action is outputted. Another partial portion of the virtual keyboard on the first display area is displayed by a scrolling function according to the gesture signal. An input action of the user is detected by the touch unit, and an input signal corresponding to a virtual button which is selected from the virtual keyboard is outputted according to the input action. At last, words or symbols are recorded according to the input signal.

### BRIEF DESCRIPTION OF THE DRAWINGS

The invention will become more fully understood by referring to the following detailed description with reference to the accompanying drawings, wherein:

Fig. 1A is schematic diagram illustrating a hand-held device 100A according to an embodiment of the invention;

Fig. 1B is schematic diagram illustrating a hand-held device 100B according to another embodiment of the invention

Fig. 2A-2C are schematic diagrams illustrating the display unit 120 according to the embodiments of the invention;

Fig. 3A-3B are schematic diagrams illustrating the display unit 120 according to an embodiment of the invention; and

Fig. 4 is a flowchart 400 of the method of inputting data according to an embodiment of the invention.

### DETAILED DESCRIPTION OF THE INVENTION

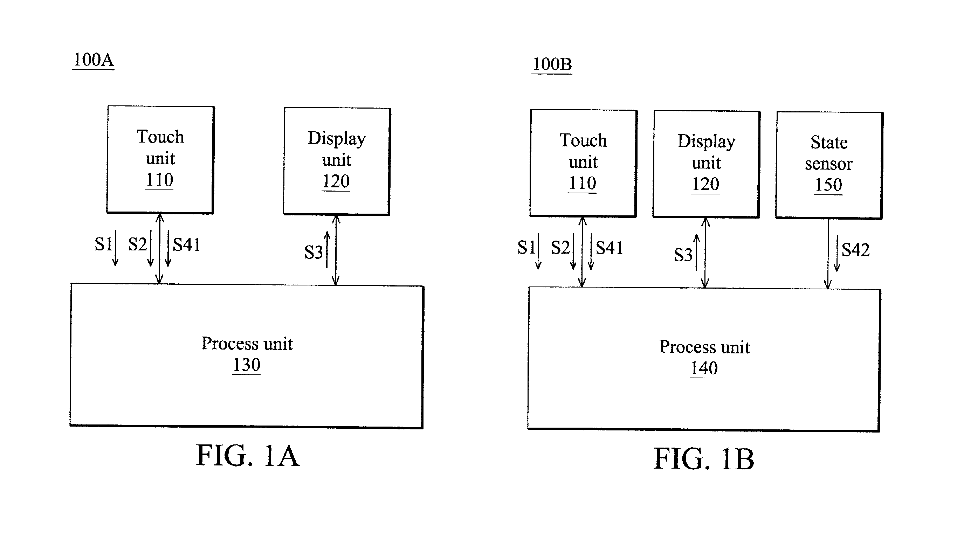

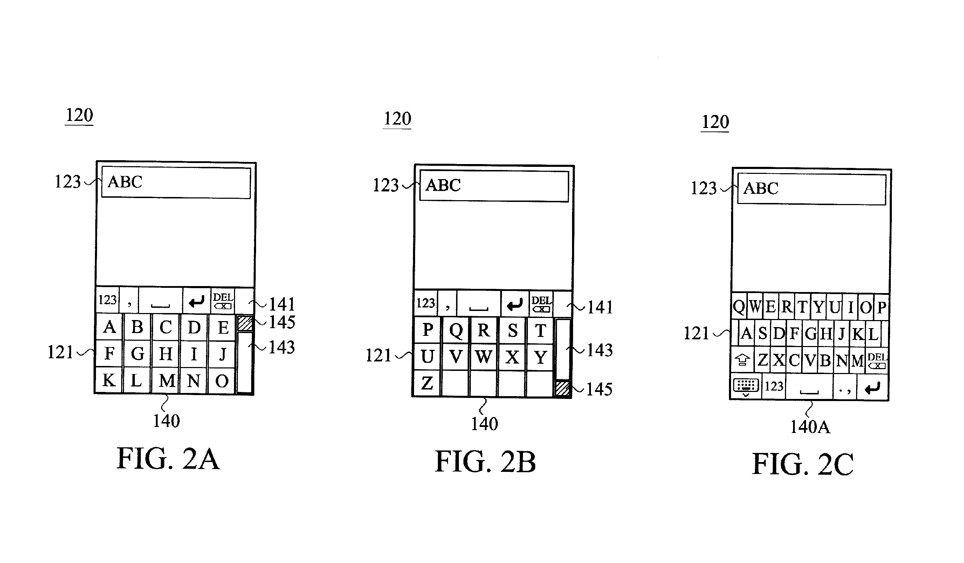

Fig. 1A is schematic diagram illustrating a hand-held device 100A according to an embodiment of the invention. In this embodiment, the hand-held device 100A comprises a touch unit 110, a display unit 120, and a process unit 130. The touch unit 110 is configured to detect the drag action of a user on the display unit 120, and output a gesture signal S1 corresponding to the drag action, wherein the drag action indicates the sliding action on the virtual keyboard 140 by the finger of a user, and it will be illustrated specifically with reference to Fig. 2A-2B. In addition, the touch unit 110 is further configured to detect the input action on the virtual keyboard 140 corresponding to the display unit 120, and output an input signal S2 corresponding to the input action.

Fig. 2A is schematic diagram illustrating the display unit 120 according to an embodiment of the invention. In the Fig. 2A, the display unit 120 comprises a first display area 121. The display unit 120 displays a partial portion of the virtual keyboard 140 on the first display area 121, and displays the other partial portion of the virtual keyboard 140 (presented as Fig. 2B) on the first display area 121 by scrolling the virtual keyboard 140 according to the control signal S3. The control signal S3 is outputted by the process unit 130 according to the gesture signal S1. In addition, the display unit 120 also comprises a second display area 123. The display unit 120 displays the words or symbols outputted by the user, for example the word string "ABC" on the second display area 123 in the Fig. 2A according to the input signal S2 corresponding to the input action of the user. In an embodiment of the invention, the drag action of the user on the display unit 120 is operated on the first display area 121 of the display unit 120. In an embodiment of the invention, a first row of the virtual keyboard 140 has some essential function keys arranged such as Backspace, Space, Enter, number/word switch key.

Fig. 2B is schematic diagram illustrating the display unit 120 according to another embodiment of the invention. In the Fig. 2B, the virtual keyboard 140 comprises a drag area 143. The drag area 143 comprises a virtual drag bar 145. The user uses the virtual drag bar 145 of the drag area 143 to scroll the virtual keyboard 140 for displaying another partial portion of the virtual keyboard 140. Specially speaking, another partial portion of the virtual keyboard 140 in the invention is not restricted to the buttons displayed in the Fig. 2B. So long as the buttons displayed on the display unit 120 are different from the buttons displayed in the Fig. 2A after the user drags the virtual drag bar 145, i.e. when the virtual drag bar 145 on the top of the drag area 143, the buttons of the virtual keyboard 140 which is displayed on the display unit 120 could be presented in another partial portion of the virtual keyboard 140.

Returning to Fig. 1A, according to the embodiment of the invention, when the touch unit 110 detects that the input action of the user corresponds to a determined virtual button 141 of the virtual keyboard 140, the touch unit 110 generates the model selection signal S41. Then, the display unit 120 is controlled by the process unit 130 to display the entire virtual keyboard 140A (presented as Fig. 2C) or the partial portion of the virtual keyboard 140 on the first display area 121 according to the model selection signal S41. According to the embodiment of the invention, the determined virtual button 141 is allocated on the first row of the virtual keyboard 140. According to the embodiment of the invention, the virtual button of the entire virtual keyboard 140A is displayed according to the allocation of the traditional keyboard.

Fig. 1B is a schematic diagram illustrating a hand-held device 100B according to another embodiment of the invention. In the embodiment, the hand-held device 100B further comprises a state sensor 150. The state sensor 150 is configured to detect the location state of the hand-held device 100B. When the hand-held device 100B is horizontal, the state sensor 150 generates the model selection signal S42, and then the display unit 120 is controlled by the process unit 130 to display the entire virtual keyboard 140A on the first display area 121 according to the model selection signal S42. When the hand-held device 100B is vertical, the state sensor 150 generates the model selection signal S42, and then the display unit 120 is controlled by the process unit 130 to display the partial portion of the virtual keyboard 140 on the first display area 121 according to the model selection signal S42. According to the embodiment of the invention, the state sensor 150 is a G-sensor, and the G-sensor comprises a Gyroscope configured to provide heading information to the G-sensor for determining whether the hand-held device 100B is vertical or horizontal. According to the embodiment of the invention, when the hand-held device 100B is horizontal, the touch unit 110 generates the model selection signal S41 by pressing the determined virtual button 141 of the virtual keyboard 140. Then, the display unit 120 is controlled by the process unit 130 to display the entire virtual keyboard 140A or the partial portion of the virtual keyboard 140 on the first display area 121 according to the model selection signal S41, wherein if the partial portion of the virtual keyboard 140 is displayed on the first display area 121, the size of the buttons of the partial portion of the virtual keyboard 140 is the same as the size of the buttons which are presented when the hand-held device 100B is vertical.

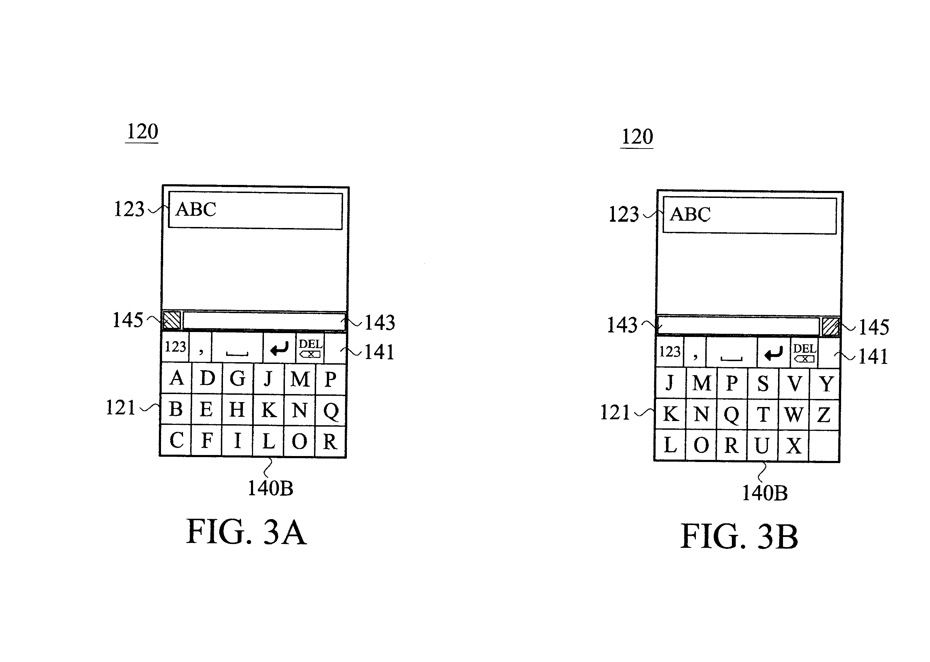

According to the embodiment of the invention, the drag action of the user is horizontally shifted or vertically shifted according to the allocation of the buttons of the virtual keyboard 140. For example, in the Fig. 2A-2B, the user drags the virtual drag bar 145 horizontally on the drag area 143 according to the allocation of the buttons of the virtual keyboard 140. According to another embodiment of the invention, in the Fig. 3A-3B, the user drags the virtual drag bar 145 vertically on the drag area 143 according to the allocation of the buttons of the virtual keyboard 140. According to the embodiment of the invention, the drag action of the user could be regarded as the sliding action of the fingers of a user on the virtual keyboard 140 for displaying different parts of the virtual keyboard 140, and the sliding direction of the fingers is determined according to the allocation of the buttons of the virtual keyboard 140.

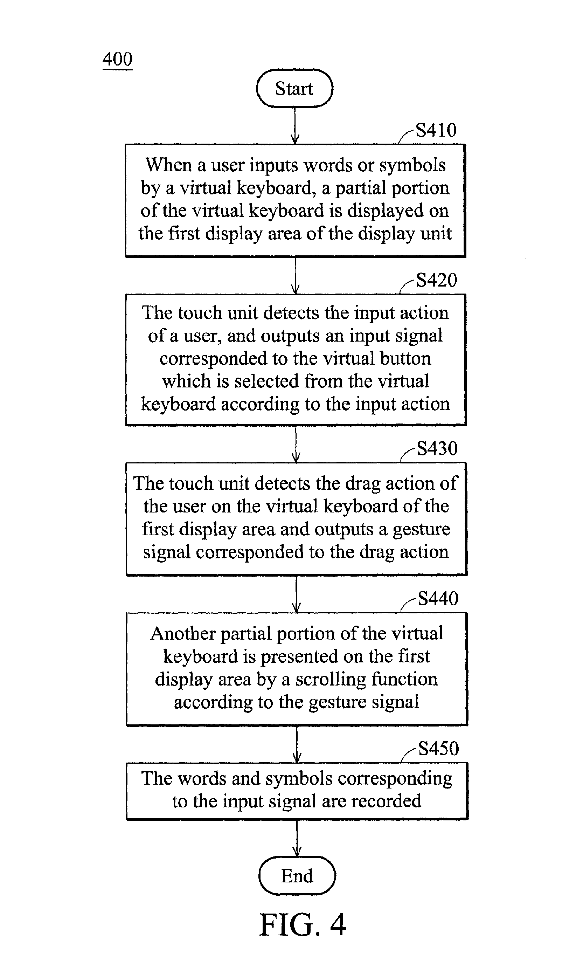

Fig. 4 is a flowchart 400 of the method of inputting data according to the embodiment of the invention. The method is applied in a hand-held device which comprises a display unit. In step S410, when a user inputs words or symbols by a virtual keyboard, a partial portion of the virtual keyboard is displayed on the first display area of the display unit. In step S420, the touch unit detects the input action of a user, and outputs an input signal corresponded to the virtual button which is selected from the virtual keyboard according to the input action. In step S430, if the buttons presented on the partial portion of the virtual keyboard does not comprise the words or symbols which the user needs, the touch unit detects the drag action of the user on the virtual keyboard of the first display area and outputs a gesture signal corresponded to the drag action. In step S440, another partial portion of the virtual keyboard is presented on the first display area by a scrolling function according to the gesture signal. In step S450, the words and symbols corresponding to the input signal are recorded.

The scrolling virtual keyboard proposed in the invention displays fewer buttons therefore the buttons of the virtual keyboard are larger which makes the user press the buttons of the virtual keyboard precisely, and avoids the touching other buttons by accident. Therefore, the scrolling virtual keyboard proposed in the invention increases the convenience and accuracy of inputting data.

Data display methods and systems, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A hand-held device comprising:
a touch unit detecting a drag action of a user and outputting a gesture signal
corresponding to the drag action;
a display unit having a first display area, configured to display a partial portion
of a virtual keyboard and display another partial portion of the virtual keyboard by a scrolling function according to a control signal; and
a process unit outputting the control signal according to the gesture signal.

2. The hand-held device of claim 1, wherein the touch unit further detects an input action on the virtual keyboard corresponding to the user and outputs an input signal corresponding to the input action, and the display unit further comprises a second display area and displays related words or symbols according to the input signal.

3. The hand-held device of claim 1, wherein the process unit further controls the display unit to display the entire virtual keyboard or a partial portion of the virtual keyboard on the first display area according to a mode select signal.

4. The hand-held device of claim 3, wherein when the touch unit detects that the input action of the user corresponds to a determined button of the virtual keyboard, the touch unit generates the mode select signal.

5. The hand-held device of claim 3, further comprising:
a state sensor, wherein when the state sensor detects that the hand-held device is horizontal and when the touch unit detects that the input action of the user corresponds to a determined button of the virtual keyboard, the state sensor generates the mode select signal.

6. The hand-held device of claim 3, further comprising:
a state sensor, wherein when the state sensor detects that the hand-held device is horizontal, the state sensor generates the mode select signal, and the process unit indicates the display unit to display the entire virtual keyboard on the first display unit according to the mode select signal, and when the state sensor detects that the hand-held device is vertical, the state sensor generates the mode select signal, and the process unit indicates the display unit to display the entire virtual keyboard on the first display unit according to the mode select signal.

7. The hand-held device of claim 1, wherein the drag action of the user is a vertical shift or a horizontal shift according to an allocation method of buttons of the virtual keyboard.

8. A method of inputting data, applied to a hand-held device with a display unit, comprising:
displaying a partial portion of a virtual keyboard on a first display area of the
display unit;
detecting a drag action of a user by a touch unit, and outputting a gesture
signal corresponding to the drag action;
displaying another partial portion of the virtual keyboard on the first display
area by a scrolling function according to the gesture signal;
detecting an input action of the user by the touch unit, and outputting an input
signal corresponding to a virtual button which is selected from the virtual keyboard according to the input action; and
recording words or symbols according to the input signal.

9. The method of inputting data of claim 8, wherein the display unit further comprises a second display area and displays the words or symbols according to the input signal.

10. The method of inputting data of claim 8, further comprising:
indicating the display unit to display the entire virtual keyboard or a partial portion of the virtual keyboard on the first display area according to a mode select signal.

11. The method of inputting data of claim 8, wherein the drag action of the user is a vertical shift or a horizontal shift according to an allocation method of buttons of the virtual keyboard.

12. The method of inputting data of claim 10, further comprising:
generating the mode select signal when the input action of the user corresponds to a determined button of the virtual keyboard.

13. The method of inputting data of claim 10, further comprising:
using a state sensor, wherein when the state sensor detects that the hand-held device is horizontal and when the touch unit detects that the input action of the user corresponds to a determined button of the virtual keyboard, the state sensor generates the mode select signal.

14. The method of inputting data of claim 10, further comprising:
using a state sensor, wherein when the state sensor detects that the hand-held device is horizontal, the state sensor generates the mode select signal, and the process unit indicates the display unit to display the entire virtual keyboard on the first display unit according to the mode select signal, and when the state sensor detects that the hand-held device is vertical, the state sensor generates the mode select signal, and the process unit indicates the display unit to display the entire virtual keyboard on the first display unit according to the mode select signal.
